# EUROPEAN PATENT APPLICATION

(11) **EP 1 525 835 A1**
(43) Date of publication of application: **27.04.2005**
(21) Application number: 04256302.3
(22) Date of filing: 13.10.2004
(51) Int. Cl.: A47J 43/07, A47J 43/046

(54) **Food processing device**

(30) Priority: 25.10.2003 GB 0324966
(71) Applicant: Salton Europe Limited, Manchester M35 0HS (GB)
(72) Inventor: Bradshaw, Luke Charles, Manchester, M20 4PW (GB); Williams, Michael John, Manchester, M29 7NW (GB)
(74) Representative: Davies, Robert Ean

(57) **Abstract**

A food processing device is disclosed. The food processing device includes: a blade arranged for rotation; a feed chute (120) having an aperture arranged to receive food for processing; a plunger (102) for urging food for processing into the feed chute and towards the blade. The feed chute comprises a barrier (140), movable between a first, generally closed, position and a second, generally open, position, whereby insertion of the plunger into the feed chute causes the barrier to move from the first to the second position.

## Description

The present invention concerns a food processing device, and has particular, but not exclusive, application in devices for extracting juice from fruit or vegetables.

In recent times, with the increased attention paid to nutrition and healthy eating, many people prepare fresh fruit or vegetable juice at home using domestic juice extracting machines. Such machines typically include an extracting plate rotatably mounted, having a plurality of sharp blades against which the fruit to be processed is forced by action of a plunger. The extracting disc is rotated at high speed by an electric motor and centrifugal action forces solid waste matter to be expelled and the extracted juice to drip through the disc to be collected in a suitable container either inside or outside the machine.

With prior art processors or extractors, in order to extract juice from a piece of fruit, it is generally necessary to cut the fruit into pieces small enough to be fed into the machine's feed chute. The feed chute is typically arranged to have a relatively small diameter for safety reasons, so that users, particularly young children, can not inadvertently contact the extracting disc with their fingers.

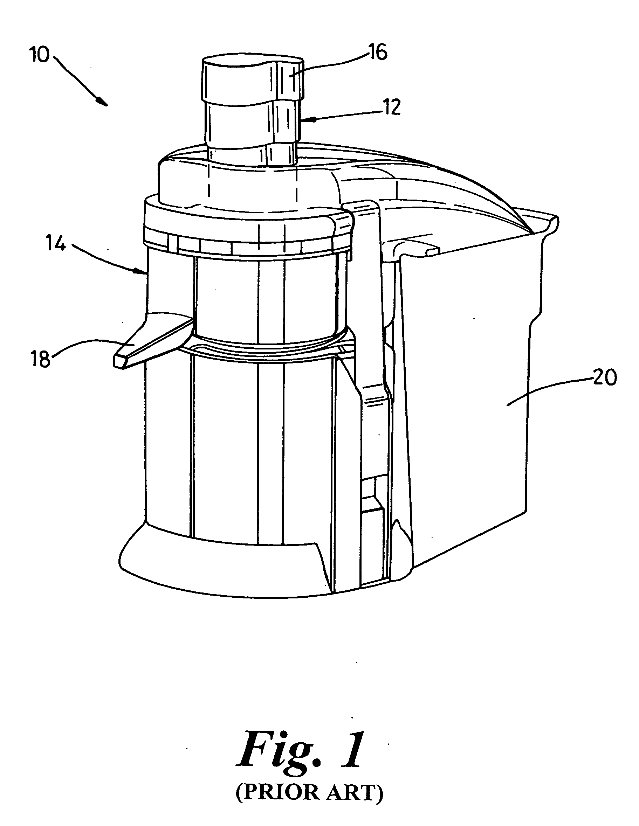

Figure 1 shows a prior art juice extractor 10. The feed chute 12 extends upwardly from the main body 14 of the extractor. Also shown is pusher or plunger 16 which is used to push fruit into the feed chute so that it may be forced against the rotating blades of the extracting disc positioned adjacent the end of the feed chute.

The main body 14 of the extractor 10 has an outlet spout 18 from which the extracted juice is dispensed from the machine for collection in suitable receptacle. Also shown is the pulp collection bin 20 in which solid waste material is collected for later disposal.

There are various international standards such as EN 60335-2-14:2003 which covers centrifugal juicers, graters and shredders as well as other kitchen products, which dictate the maximum aperture permissible, in order to be certified as safe. However, there is a demand for wider feed chutes such that whole items of fruit or vegetable, or larger quantities thereof, can be fed into the machine without any prior cutting or chopping. For instance, it would be desirable if a user could feed whole apples, pears or beetroot, or several carrots, celery sticks or ginger roots for instance without having to prepare them in any way. This desire is in direct conflict with the safety requirement which demands that accessible chutes may not be used for the aforementioned safety reasons. EN 60335-2-14:2003, for instance, specifies a test probe that when inserted into the product should not come in contact with harmful parts of the product.

An object of embodiments of the present invention is to provide a juice extractor or other food processing device which is provided with a relatively wide feed chute for receiving larger items of food, but which operates safely and reduces the risk of users accidentally contacting any sharp or otherwise dangerous parts of the machine.

According to the present invention, there is provided a food processing device comprising:
- a blade arranged for rotation;
- a feed chute having an aperture arranged to receive food for processing;
- a plunger for urging food for processing into the feed chute and towards the blade;
wherein the feed chute comprises a barrier, movable between a first, generally closed, position and a second, generally open, position, whereby insertion of the plunger into the feed chute causes the barrier to move from the first to the second position.

Preferably, in the first position the barrier partially obstructs the feed chute. By partially obstructing the feed chute, manual access to the blades or other moving parts is restricted, even if such parts are visible around the periphery of the barrier. In some embodiments of the invention, it may not be possible to completely restrict access, but it may be possible to effectively prevent a user accessing any dangerous parts.

More preferably, in the first position the barrier completely obstructs the feed chute.

Preferably, the barrier is biased towards the first position.

Preferably, the biasing force is provided by a spring.

Preferably, the barrier comprises a hinged member. Such a hinged member is a trapdoor.

Preferably, the hinged member is generally concave such that when in the second position, it generally conforms to an inner surface of the feed chute.

Preferably, the barrier comprises a plurality of hinged members. This configuration can offer advantages in allowing shorter feed chutes to be used than would otherwise be the case.

Preferably, the barrier comprises an iris diaphragm.

Preferably, the plunger comprises a key member for cooperation with a lock disposed within the feed chute.

Preferably, the key member comprises a raised ridge running along at least a part of an outer surface of the plunger.

Preferably, the lock comprises a channel running along at least part of an interior surface of the feed chute, the channel including a biased member for locking the barrier in the closed position, such that insertion of the plunger causes the biased member to re-positioned and thus allowing the barrier to be moved.

Preferably, the lock member includes an elongate member anchored at one end and having a projection at a free end, the elongate member being biased towards a central axis of the feed chute by action of a spring.

Preferably, the spring is a leaf spring. Alternatively, other types of spring may be used with similar effect.

Preferably, the key member comprises a magnetic element and the lock member comprises a further magnetic element.

Preferably, in use, the feed chute is arranged substantially directly above the blade.

Preferably, the blade may be arranged to be replaceable by a citrus juicing element.

Preferably, the feed chute is arranged to receive citrus fruit, and the plunger is operable to urge fruit through the feed chute towards the citrus juicing element.

Preferably, the device is a juice extractor for extracting juice from various fruit or vegetables.

Preferably, the device is a food processor for chopping various foodstuffs.

For a better understanding of the present invention, and to understand how the same may be brought into effect, the invention will be described, by way of example only, with reference to the appended drawings in which:
Figure 1 shows perpective view of a prior art food processor of the juice extracting type;
Figure 2 shows a cross-section through the feed chute of an embodiment of the present invention, with the plunger outside the feed chute;
Figure 3 shows a cross-section through the feed chute of an embodiment of the present invention, with the plunger just entering the feed chute;
Figure 4 shows a cross-section through the feed chute of an embodiment of the present invention, with the plunger in a position where the safety barrier is unlocked;
Figure 5 shows a cross-section through the feed chute of an embodiment of the present invention, with the plunger fully inside the chute and the safety barrier fully open;
Figures 6a and 6b show cross-sectional and plan views respectively of an alternative embodiment of the present invention where the barrier comprises an iris diaphragm; and
Figure 7 shows a cross-sectional perspective view of an embodiment of the invention used to extract juice from citrus fruits.

Embodiments of the present invention provide a safety feature which effectively prevents access to the inner workings of a food processing device via the feed chute unless the appropriate plunger or forcing device is used. Embodiments of the invention are particularly useful in the field of juice extraction devices, having a relatively wide feed chute, although smaller chutes and other types of food processing device may also benefit from features of the invention.

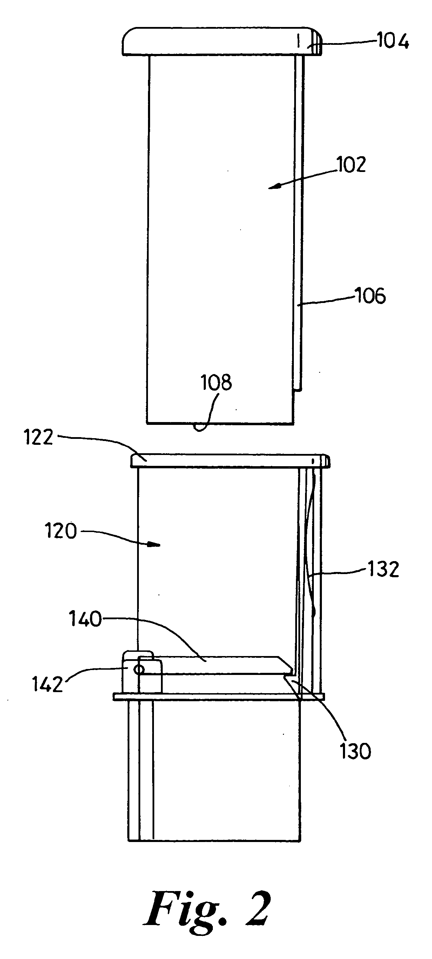

Figure 2 shows a cross-section through part of a juice extractor according to an embodiment of the invention, including the feed chute 120 and plunger 102. Externally, the appearance of the feed chute 120 may closely resemble prior art feed chutes, and users would not generally notice any particular differences. However, on looking into the feed chute 120, the user would notice that the processing blade or extraction disc is concealed behind a safety gate or barrier 140 and is not visible or accessible.

The feed chute 120, has a flange 122 at its entry for guiding the entry of the plunger or pusher 102. The feed chute has a central axis extending along its length from the opening towards the blade. In use, the central axis of the feed chute and the plunger coincide. The plunger 102 is provided so that food to be processed, e.g. apples to be juiced, can be pushed or forced downwards towards the rotating blade. This is achieved by the user applying manual pressure to upper surface 104 of the plunger 102. The plunger 102 in this embodiment has a circular cross-section, but in other embodiments the cross section may be any suitable shape, such as elliptical.

Figure 2 is a cross-section through the feed chute and plunger and shows a barrier or trapdoor 140 blocking the feed chute some way along its length. This barrier 140 prevents access to the blades and internal workings of the juice extractor until the barrier is deactivated and moves out of the way.

The barrier is configured to open and allow access to the blade only when a release mechanism has been activated by insertion of the plunger 102. The plunger 102 is provided with a raised elongate ridge 106 which runs along at least a part of the length of the plunger 102. The ridge is intended to engage with a similarly proportioned slot which runs along at least a part of the inner surface of the feed chute 120. In this way, the plunger 102 may only be inserted into the feed chute 120 in one orientation.

Disposed within the slot in feed chute 120 is resilient catch 130. Catch 130 is biased towards the central axis of the feed chute 120 by spring 132. In an alternative embodiment, catch 130 and spring 132 may be implemented as a single resilient device, or a helical spring can be provided in place of the leaf spring.

As seen in Figure 2, one end of trapdoor 140 is held in position by a projection at the end of catch 130. Trapdoor 140 pivots about its other end, and is provided with a sprung hinge 142 such that it is biased towards the closed position as shown in Figure 2. In this way, in the absence of the plunger, the trapdoor assumes the closed position and is secured in that position by catch 130.

The trapdoor 140 may form a complete or partial barrier across the width of the feed chute. If it forms only a partial barrier, the gap left should generally not be large enough to allow manual access to the blades. The trapdoor may have a curved, generally concave, profile, such that when in the open position, it is positioned flush against the curved inner surface of the feed chute.

A suitable recess may be provided in the inner surface of the feed chute to accommodate the trapdoor in this position.

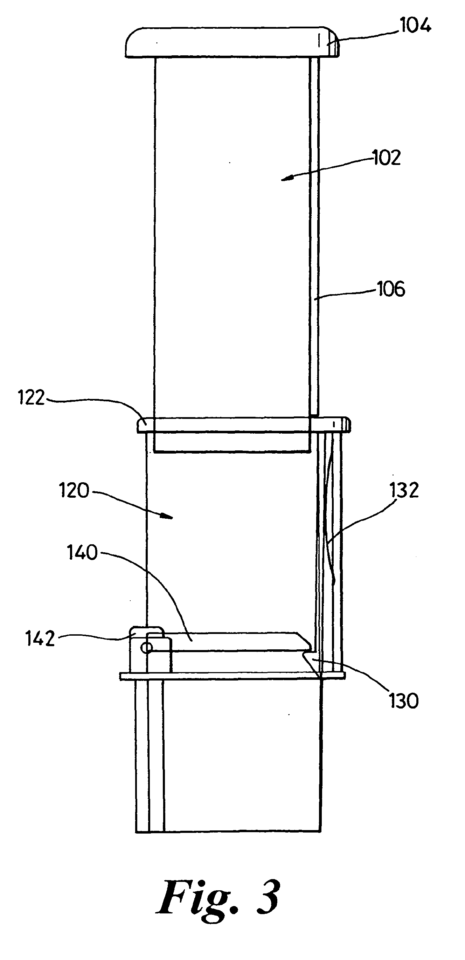

Figure 3 shows the situation as the plunger 102 is positioned into the feed chute 120. As can be seen, the plunger 102 completely closes off the feed chute 120, preventing any manual access to the feed chute. At this stage of operation, the trapdoor 140 is closed and locked as described previously.

When plunger 102 is inserted into feed chute 120, ridge 106 travels along the corresponding slot until some way along its length, catch 130 is forced against spring 132, causing the projection at the end of the catch to travel back away from the central axis of the feed chute. In this way, the trapdoor 140 is unlocked. The trapdoor remains closed, however, as it is biased towards that position.

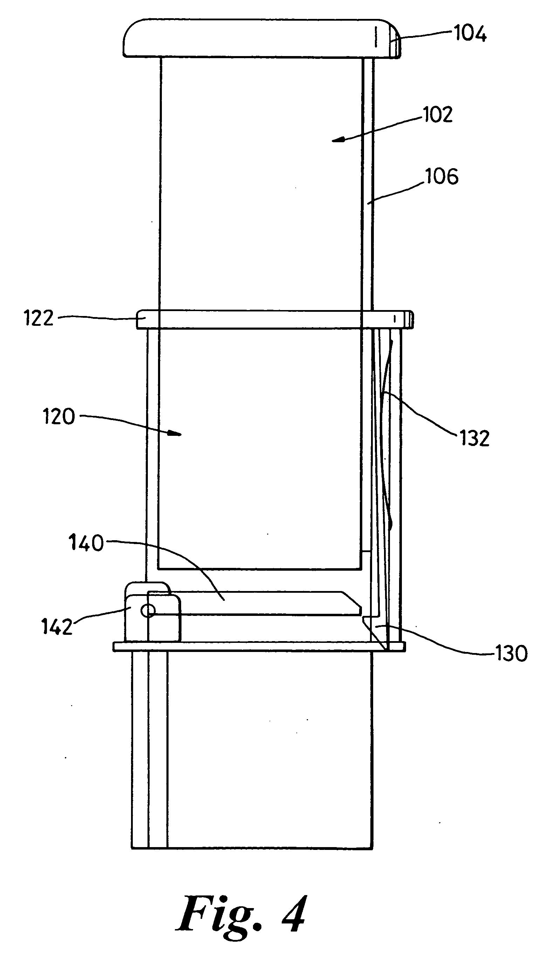

Figure 4 shows this arrangement, just as the trapdoor 140 is unlocked by insertion of the plunger 102. As the user applies more pressure to the upper surface 104 of plunger 102, the biasing force is overcome and any food in the feed chute is brought into contact with the blade.

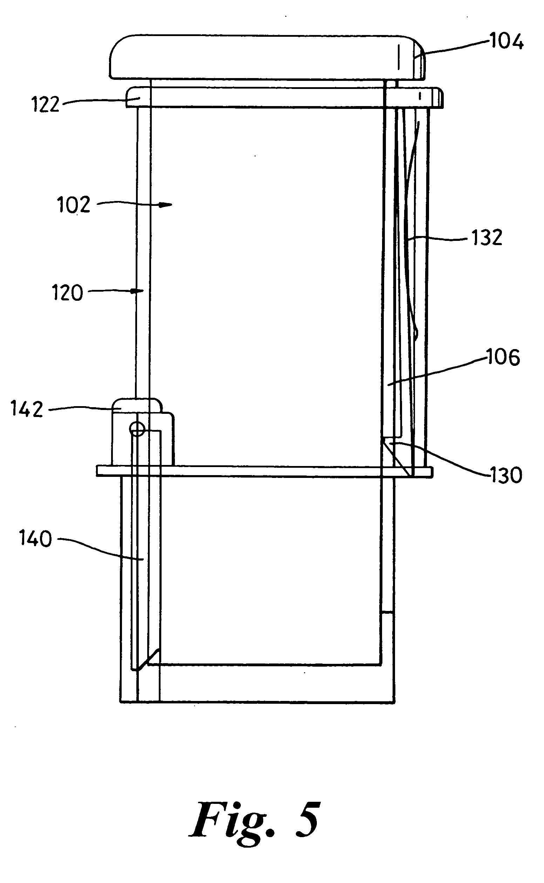

This arrangement is shown in Figure 5, where the plunger 102 is fully inserted into the feed chute 120 and the trapdoor 140 is fully open.

Once the food in the feed chute has been processed, the user withdraws the plunger 102. As he does so, the force provided to overcome the biasing force holding the trapdoor 140 open is removed, causing the trapdoor to move towards the closed position. At first, the only force holding the trapdoor in the closed position is provided by its biased hinge arrangement 142. However, as the plunger is removed further, catch 130 moves inwards towards the central axis of the feed chute. This causes the projection at the end of catch 130 to move under the trapdoor 140, thus securely locking the trapdoor in the closed position.

As will be understood from the foregoing, the trapdoor is only opened once the plunger is at least some way inside the feed chute. In this way, it is not possible for a user to insert his fingers into the feed chute, as it is completely filled with the plunger. Likewise, when the plunger is withdrawn, the trapdoor closes and is locked in position before the plunger is completely withdrawn from the feed chute, ensuring again that the user cannot come to any harm as the feed chute is again completely filled by the plunger.

Embodiments of the invention therefore require the use of a suitable plunger in order to operate. If a user attempted to use a non-suitable plunger, lacking the necessary unlocking mechanism, the barrier in the feed chute will not open. In this way, a user is not tempted to use his hand, or an inappropriate implement such as a wooden spoon, to push food into the processor.

The unlocking mechanism shown in Figures 2 to 5, comprising a raised ridge 106 on the plunger 102 for interaction with a catch 130 in a slot in the feed chute 120 is exemplary only, and other release mechanisms are envisaged which perform essentially the same function. In a particular alternative embodiment, catch 130 may be provided with a magnet along its length. A similar magnet may be provided within the plunger 102. The two magnets may be arranged to so that as the plunger is inserted into feed chute 102, like poles move adjacent one another, causing magnetic repulsion and thus causing catch 130 to move away from the central axis of the feed chute 102. This has the same effect as has been described previously, in relation to Figure 4, of moving the projection at the end of catch 130 from beneath the trapdoor 140, and so unlocking the safety mechanism. This particular embodiment has the advantage that if a suitable magnet arrangement is chosen for incorporation into the plunger 102, the plunger may be inserted into the feed chute 120 in any orientation as no raised ridge 106 is required.

The trapdoor 140 is a single barrier, whose dimensions have an impact on the overall length of the feed chute 102. In order for the open trapdoor to be clear of the blade, the hinged end 142 of the trapdoor 140 must be positioned at a distance above the blade at least equal to the diameter of the feed chute. For wider chutes, this can result in a longer chute than would otherwise be desirable.

One way to reduce the overall length of the feed chute in these circumstances is to provide two trapdoors which each obstruct half of the feed chute diameter and meet in the centre. In this embodiment, the locking mechanism at a position 90° around the interior of the tube from that shown in Figure 2. With this arrangement the locking mechanism would be positioned 90° around the interior of the tube.

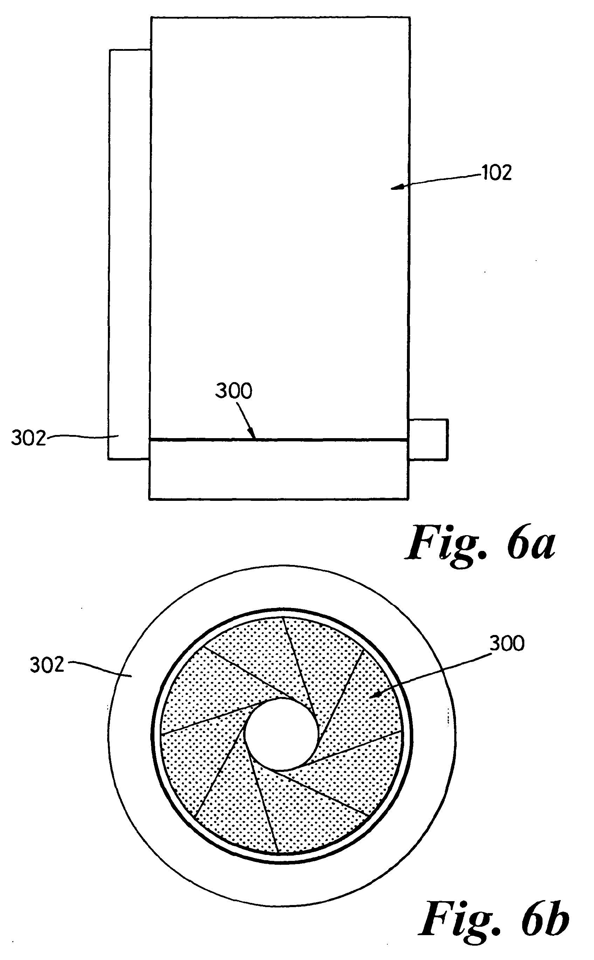

Another alternative embodiment, uses an iris diaphragm as a barrier between the feed chute and the blade. This is shown in Figures 6a and 6b, which show a cross-sectional and end view of the feed chute 102 respectively. Iris 300 is positioned so that it obstructs the feed chute just above its lower end, above the blade. Associated with the iris 300 is its control mechanism 302, which protrudes slightly around the circumference of the feed chute and also accommodates the individual leaves of the iris when it is in the open position. This configuration of barrier has the advantage that it can be positioned much closer to the blade, as there is no need to provide any space beneath the barrier as was the case in the previous embodiments which employed trapdoors. This can allow the use of shorter feed tubes, which may be important when considering the aesthetic design of the processor.

Similarly to the design shown in Figures 2 to 5, when plunger 102 is inserted into feed chute 120, protrusion 106 travels along the corresponding slot until some way along its length, a catch is triggered which causes the iris to open, thus allowing the plunger to push the food stuffs onto the extracting disc. When the plunger travels back up along the feed chute, the catch is released causing the iris to close. The means by which the iris is caused to open or close can be electrical ( for example, a servo motor) or solely mechanical ( for example, a sprung or geared mechanism).

In a particular embodiment of the present invention, the juice extractor, which, in a first mode, utilises a rotating extracting disc having one or more sharp blades thereon, also operates in a second mode allowing the extraction of juice from citrus fruits such as oranges and grapefruits. The second mode requires the removal of the extracting disc and the substitution of a citrus juicing attachment which includes a ridged protrusion which penetrates the fleshy part of a fruit which has previously been cut in half. A safety interlock may be provided to ensure that the juice extractor is inoperable when the feed chute is removed.

In this second mode, the citrus juicing attachment is generally caused to rotate at a speed somewhat slower than that used in the first mode, and the feed chute is removed allowing the user to press the fruit directly onto the juicing attachment without requiring the use of a plunger. Since the citrus juicing attachment does not comprise any sharp elements, it is generally considered safe to allow open access to it. However, for better performance of the juicer, it may be desirable to cause the citrus juicing attachment to be rotated at a higher speed. In this case, there is a risk that manual contact with the citrus juicing attachment could be dangerous.

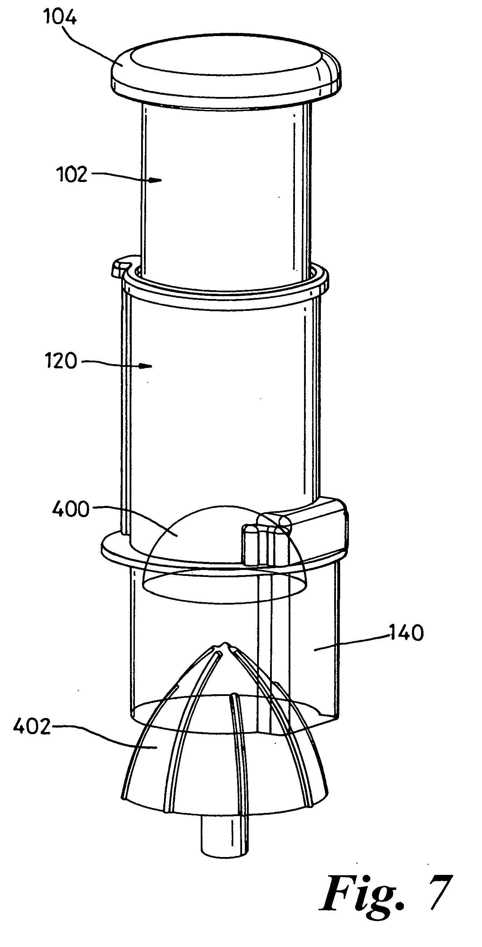

To address this problem, an embodiment of the present invention, as shown in Figure 7, allows citrus fruit to be fed into the feed chute an a manner previously described in relation to the first mode of operation. However, rather than contacting the extracting disc, the fruit 400 is urged against the citrus juicing attachment 402 by downward pressure on the plunger 102 . In this way , the user is protected from contacting the citrus juicing attachment. The waste skins of the citrus fruit can then be removed by removing the lid to gain access to the interior of the juicer.

Although reference has primarily been made to a juice extractor, the skilled man in this field will realise that other food processing devices, such as blenders, liquidisers and general food processors can benefit from the invention. Embodiments of the invention provide a convenient method of improving the safety of such machines by restricting access to potentially harmful parts of the machine, which users may otherwise allow themselves to contact.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A food processing device comprising:
• a blade arranged for rotation;
• a feed chute having an aperture arranged to receive food for processing;
• a plunger for urging food for processing into the feed chute and towards the blade;
wherein the feed chute comprises a barrier, movable between a first, generally closed, position and a second, generally open, position, whereby insertion of the plunger into the feed chute causes the barrier to move from the first to the second position.

2. A device as claimed in claim 1 wherein in the first position the barrier partially obstructs the feed chute.

3. A device as claimed in claim 1 wherein in the first position the barrier completely obstructs the feed chute.

4. A device as claimed in any one of the preceding claims wherein the barrier is biased towards the first position.

5. A device as claimed in claim 4 wherein the biasing force is provided by a spring.

6. A device as claimed in any one of the preceding claims wherein the barrier comprises a hinged member.

7. A device as claimed in claim 6 wherein the hinged member is generally concave such that when in the second position, it generally conforms to an inner surface of the feed chute.

8. A device as claimed in claim 6 or claim 7 wherein the barrier comprises a plurality of hinged members.

9. A device as claimed in any one of claims 1 to 5 wherein the barrier comprises an iris diaphragm.

10. A device as claimed in any one of the preceding claims wherein the plunger comprises a key member for cooperation with a lock disposed within the feed chute.

11. A device as claimed in claim 10 wherein the key member comprises a raised ridge running along at least a part of an outer surface of the plunger.

12. A device as claimed in claim 10 or 11 wherein the lock comprises a channel running along at least part of an interior surface of the feed chute, the channel including a biased member for locking the barrier in the closed position, such that insertion of the plunger causes the biased member to re-positioned and thus allowing the barrier to be moved.

13. A device as claimed in claim 12 wherein the lock member includes an elongate member anchored at one end and having a projection at a free end, the elongate member being biased towards a central axis of the feed chute by action of a spring.

14. A device as claimed in claim 13 wherein the spring is a leaf spring.

15. A device as claimed in any one of claims 1 to 10 wherein the key member comprises a magnetic element and the lock member comprises a further magnetic element.

16. A device as claimed in any one of the preceding claims wherein, in use, the feed chute is arranged substantially directly above the blade.

17. A device as claimed in any one of the preceding claims wherein the blade may be arranged to be replaceable by a citrus juicing element.

18. A device as claimed in claim 17 wherein the feed chute is arranged to receive citrus fruit, and the plunger is operable to urge fruit through the feed chute towards the citrus juicing element.

19. A device as claimed in any one of the preceding claims wherein the device is a juice extractor for extracting juice from various fruit or vegetables.

20. A device as claimed in any one of the preceding claims wherein the device is a food processor for chopping various foodstuffs.
